Europäisches Patentamt

European Patent Office

Office européen des brevets

(11) Veröffentlichungsnummer: 0 370 257 A2

# EUROPÄISCHE PATENTANMELDUNG

(21) Anmeldenummer: 89119786.5

(51) Int. Cl.⁵: F16K 15/14

(22) Anmeldetag: 25.10.89

(30) Priorität: 24.11.88 DE 3839590

(43) Veröffentlichungstag der Anmeldung:
30.05.90 Patentblatt 90/22

(84) Benannte Vertragsstaaten:
AT BE CH DE FR GB IT LI NL SE

(71) Anmelder: Ing. Erich Pfeiffer GmbH & Co. KG
Öschlestrasse 124 - 126
D-7760 Radolfzell 13 (Böhringen)(DE)

(72) Erfinder: Graf, Lothar
Schmollerstrasse 14a
D-7703 Rielasingen-Worblingen(DE)

(74) Vertreter: Patentanwälte RUFF, BEIER und
SCHÖNDORF
Neckarstrasse 50
D-7000 Stuttgart 1(DE)

(54) Ventil, insbesondere für manuelle Austragsvorrichtungen.

(57) Bei einem Ventil (1) für handbetätigbare Medien-Austragvorrichtungen, das nach Art eines Schlauchventiles ausgebildet ist, sind in Längsrichtung hintereinander liegende, gesonderte Dicht- und Drosselbereiche vorgesehen, die zweckmäßig durch entsprechende Innenprofilierungen des Ventilmantels (20) gebildet sind, der eine Dichtlippe (46), in Austragrichtung danach mehrere dicht schließende Ringteile (30) eines Drosselbereiches (27), wiederum danach Längsnuten (29) und/oder auf diese folgend einen profilierten, radial nach innen gerichteten Umlenkbereich (28) mit elastisch verformbarer Stirn- bzw. Endwand (33) bildet. Dadurch kann am Ventilausgang (26), welcher unmittelbar die ins Freie führende Austragöffnung (35) der Austragvorrichtung bildet, das Medium in einem einzigen Tropfen auch dann gesammelt werden, wenn die Austragvorrichtung eine mit relativ hohem Druck arbeitende Austragpumpe aufweist. Außerdem ergibt sich eine hohe Dichtheit des Ventiles (1).

Fig.2

## Ventil, insbesondere für manuelle Austragvorrichtungen

Die Erfindung betrifft ein Ventil, insbesondere für manuelle Austragvorrichtungen, zum Austrag von Medien, bei dem zur Verbesserung der Arbeitsweise erfindungsgemäß zwischen zwei einander unmittelbar gegenüberliegenden Flächen ein Ventildurchlaß geschaffen sein soll, der unter Druck aufweitbar ist, wobei diese Flächen zweckmäßig Umfangsflächen sind und der Ventildurchlaß entsprechend in einer Hüllfläche liegen kann. Der Ventildurchlaß führt vorteilhaft von einem Ventileingang zu einem Ventilausgang und die den Ventildurchlaß bildenden, durch wenigstens einen Bauteil gebildeten Ventilteile sind zweckmäßig als Ventilkern und als Ventilmantel ausgebildet.

Der Ventilmantel kann zwischen dem Ventileingang und dem Ventilausgang im wesentlichen an einer glatten Außenumfangsfläche des Ventilkernes anliegen. Zwischen dem Ventileingang und dem Ventilausgang kann der Ventilkern eine radial verhältnismäßig weit vorstehende Umfangswulst aufweisen, an deren Umfangsfläche der Ventilmantel in jeder Funktionslage anliegt und der mit Axialschlitzen so versehen ist, daß diese an ihren offenen Schlitzseiten in jeder Funktionslage durch den Ventilmantel verschlossen sind. Dadurch ist allerdings der Durchlaßquerschnitt im Bereich der Axialschlitze stets gleich, so daß eine Veränderung der Ventilfunktion bzw. der Ventilcharakteristik mit einfachen Mitteln nicht, sondern allenfalls nur durch Änderung des Durchlaßquerschnittes im Bereich der Axialschlitze möglich ist. Ein solches Ventil wäre auch nicht als Auslaßventil geeignet, sondern könnte nur als Zumeßventil für eine in Strömungsrichtung nachfolgende Zerstäubungseinrichtung dienen.

Der Erfindung liegt des weiteren die Aufgabe zugrunde, Nachteile bekannter Ausbildungen zu vermeiden, insbesondere ein Ventil der genannten Art zu schaffen, welches bei einfachem Aufbau und sicherer Funktion in seiner Ventilcharakteristik in einfacher Weise verändert werden kann.

Diese Aufgabe wird bei einem Ventil der beschriebenen Art gemäß der Erfindung dadurch gelöst, daß der Ventildurchlaß in mindestens einem Bereich, insbesondere im wesentlichen über seine gesamte Länge und ggf. in profilierten bzw. engsten Bereichen durch federnde Verformung aufweitbar ist, so daß das Ventil im wesentlichen rein druckabhängig arbeitet und durch Veränderung der Federcharakteristik auch die Ventilcharakteristik direkt beeinflußt werden kann. Die Ventilschließlage des Ventiles kann dabei eine vollständig sperrende Lage oder aber eine Lage mit kleinstem Durchlaßquerschnitt sein. Besonders vorteilhaft ist es, wenn die Umfangsflächen der Ventilteile zwischen dem Ventileingang und dem Ventilausgang mindestens einen Drosselbereich aufweisen, dessen Durchlaßquerschnitt zweckmäßig in der beschriebenen Weise druckabhängig rückfedernd aufweitbar ist, so daß der Ventildurchlaß z.B. keinen bzw. keinen engsten Bereich aufweist, der nicht querschnittsveränderbar ist.

Der profilierte Bereich bzw. der Drosselbereich kann durch mindestens einen Vorsprung und/oder mindestens eine zu diesem ggf. komplementäre Vertiefung in wenigstens einem der den Ventildurchlaß begrenzenden Flächen gebildet sein, wobei der Vorsprung bzw. die Vertiefung zweckmäßig ununterbrochen über den gesamten Querschnitt des Ventildurchlasses durchgeht und/oder in Längsrichtung des Ventildurchlasses zwei, drei oder mehr Vorsprünge bzw. Vertiefungen im Abstand hintereinander vorgesehen sind. Der jeweilige Vorsprung ist bevorzugt durch eine Wulst gebildet, könnte aber auch lippenartig ausgebildet sein, während die Vertiefung vorteilhaft durch eine Nut gebildet ist, in welche die Wulst im wesentlichen voll ausfüllend eingreifen kann, so daß beim Aufweiten des Ventildurchlasses in diesem Bereich ein Durchlaßspalt gebildet ist, der einen Umlenkungsbereich zwischen den beiden benachbarten und miteinander insbesondere im wesentlichen fluchtenden Abschnitten des Ventildurchlasses bildet.

Insbesondere bei im wesentlichen rotationssymmetrischer Ausbildung der Ventilteile ist vorteilhaft der Ventilmantel elastisch rückfedernd verformbar ausgebildet, obgleich statt dessen oder zusätzlich hierzu auch der Ventilkern in dieser Weise verformbar ausgebildet sein könnte.

Eine besonders vorteilhafte Weiterbildung des Erfindungsgegenstandes besteht darin, daß zwischen dem Drosselbereich und dem Ventilausgang ständig geöffnete bzw. nicht vollständig absperrbare Kanalabschnitte, wie Längskanäle, vorgesehen sind, die zweckmäßig im Abstand vom Drosselbereich beginnen und annähernd bis zum Ventilausgang reichen. Diese Längskanäle können durch über den Umfang verteilte Nuten an einem oder beiden Ventilteilen, insbesondere ausschließlich an der Innenumfangsfläche des Ventilmantels gebildet sein, der mit zwischen den Längskanälen liegenden und gegenüber diesen etwa gleich breiten Stegabschnitten zumindest bei entlastetem Ventil großflächig an der in diesem Bereich im wesentlichen glatten Außenumfangsfläche des Ventilkernes anliegt

Um bereits zu Beginn des Eintrittes des Mediums in den Ventildurchlaß eine sehr gleichmäßige Verteilung über dessen gesamten Querschnitt zu erzielen, ist der Ventileingang parallel zum Ventildurchlaß bzw. in dessen Durchflußrichtung ausgerichtet, wobei er vorzugsweise schlitz- bzw. ringförmig in einer Querschnittsebene des Ventildurchlasses liegt und ununterbrochen über den gesamten Querschnitt des Ventildurchlasses durchgeht. Dadurch wird das Medium vom Ventileingang zumindest bis nach dem Drosselbereich in einem im Querschnitt ringförmigen Strom durch den Ventildurchlaß hindurchgeführt und ggf. erst nach dem Dicht- und Drosselbereich durch die Längskanäle in einzelne, über den Umfang verteilte Längsströme aufgeteilt, die entweder nur im Bereich der Längskanäle fließen oder, bei entsprechender Aufweitung, auch zwischen diesen Längskanälen Längsströme kleineren Querschnittes bilden, so daß sich durch unterschiedliche Strömungsgeschwindigkeiten eine relativ höhe innere Strömungsreibung ergibt.

Zur Erzielung einer weiteren Verzögerung der Strömungsgeschwindigkeit des mit relativ hohem Druck und hoher Strömungsgeschwindigkeit dem Ventileingang zugeführten Mediums ist nach dem Drosselbereich bzw. im Bereich des Ventilausganges zweckmäßig mindestens eine quer zum übrigen Ventildurchlaß liegende Strömungsumlenkung vorgesehen, die unmittelbar an die zugehörigen Enden der Längskanäle anschließen und in Längsrichtung des Ventildurchlasses abgestuft bzw. mit Erhöhungen und Vertiefungen versehen sein kann, wodurch die genannten Effekte noch weiter erhöht werden. Diese Umlenkung kann einen Umlenkungswinkel von mindestens 90°, ins besondere mehr als 90°, haben, so daß das Medium praktisch zumindest auf einer kurzen Strömungsstrecke in entgegengesetzter Richtung strömt. Dadurch kann das Medium in eine am vorderen Ende des Ventilkernes liegende Umlenkpfanne geführt werden, die dem zentralen und nicht durch einen Ringspalt, sondern durch ein Loch gebildeten Ventilausgang mit Abstand gegenüberliegt und von welcher aus das Medium dann austritt. Die Ventilöffnung ist zweckmäßig von einer ringförmigen Stirnwand des Ventilmantels begrenzt, die nach Art einer Ringlippe eine wesentlich kleinere Wandungsdicke als der Mantelteil des Ventilmantels hat, so daß sie unter dem Druck des Mediums rückfedernd nachgeben und dadurch der Raum zwischen dieser Stirnwand und dem Ende des Ventilkernes druckabhängig verändert werden kann.

Durch die erfindungsgemäße Ausbildung ist es insbesondere möglich, ein Ventil bzw. eine manuelle Austragvorrichtung zu schaffen, an deren ins Freie führenden Ausgangsöffnung ein unter relativ hohem Pumpdruck dem Ventil zugeführtes Medium mit so weit beruhigter Strömung austreten kann, daß es einen austretenden Tropfen bildet, der dann am Ausgang entnommen bzw. z.B. mit einem Finger vom Ausgang abgelöst werden kann. Das Ventil eignet sich daher insbesondere für den Austrag von Flüssigkeiten oder auch von pastösen Medien, wobei der Ventilausgang unmittelbar die Austragöffnung der Austragvorrichtung bildet.

Hinter dem Ventildurchlaß bzw. dem Drosselbereich und/oder dem Ventileingang ist der Ventilmantel zweckmäßig im Querschnitt verstärkt, so daß er in diesem Bereich unter den auftretenden Druckkräften nicht oder nur sehr geringfügig aufweiten kann und dadurch die Gefahr, daß das Medium vom Ventileingang in der entgegengesetzten Richtung strömt, ausgeschlossen ist.

Der mehrfache, durch die Ringteile gebildete Ventilsitz sorgt je nach Vorspannung für eine leichtere oder strammere Ventilfunktion. Durch die verschiedenen Auflageflächen der Ringteile wird eine hohe Sicherheit sowohl in der Ventilfunktion als auch in der Dichtheit erlangt. Das Medium tritt in einem genau definierten Bereich, nämlich durch eine Öffnung aus, die innerhalb ihrer äußeren Umfangsbegrenzung auf voller Weite offen ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:

Fig. 1 eine mit einem erfindungsgemäßen Ventil versehene Austragvorrichtung, teilweise im Axialschnitt,

Fig. 2 den Ventilmantel des Ventiles gemäß Fig. 1 im vergrößerten Axialschnitt,

Fig. 3 einen Querschnitt durch den Ventilmantel gemäß Fig. 2,

Fig. 4 eine weitere Ausführungsform eines Ventiles im Axialschnitt und in Ruhestellung,

Fig. 5 das Ventil gemäß Fig. 4 am Anfang eines Arbeitszyklus,

Fig. 6 das Ventil gemäß Fig. 4 in einer weiteren Phase des Arbeitszyklus,

Fig. 7 eine weitere Ausführungsform einer mit dem Ventil nach den Figuren 4 bis 6 versehenen Austragvorrichtung in Ausgangsstellung und

Figuren 8 bis 11 weitere Funktionsstellungen der Austragvorrichtung gemäß Fig. 7.

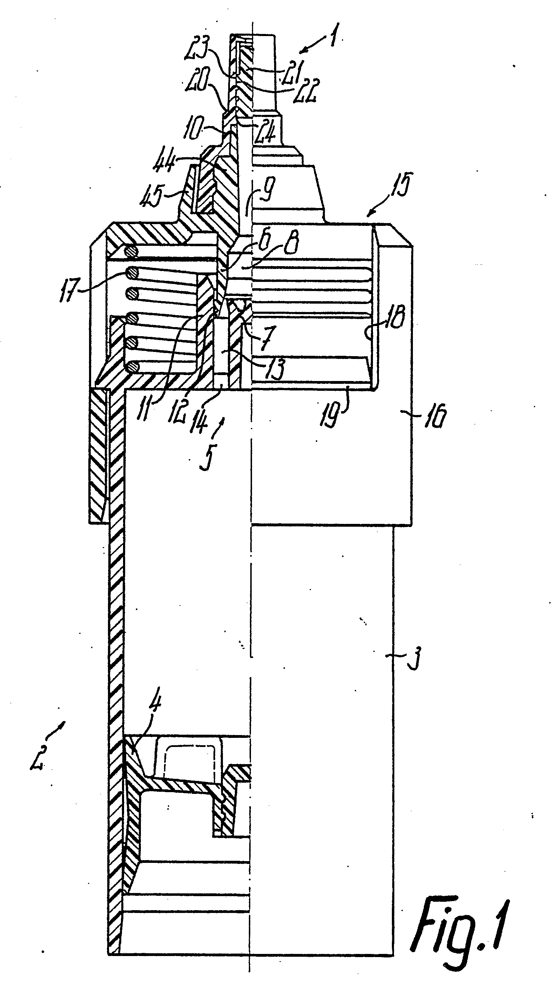

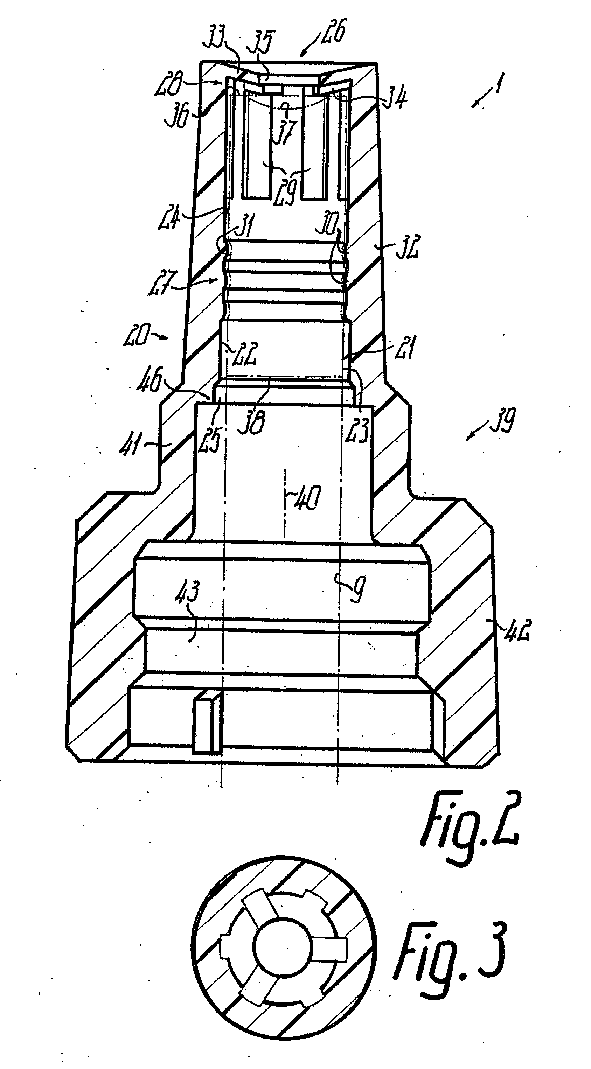

Das Ventil 1 gemäß den Figuren 1 bis 3 dient als Austragnippel von wenigen Millimetern Durchmesser für eine stiftförmige Austragvorrichtung 2 von nur etwa 2 cm Durchmeser, mit welcher ein flüssiges bzw. nach Art einer Flüssigkeit fließfähiges Medium so ausgetragen werden soll, daß es während einer an einen Pumphub anschließenden Zeitdauer als ein einziger, das gesamte Dosiervolumen enthaltender Tropfen am Austragnippel gesammelt wird und an dessen Außenseite zur Entnahme zur Verfügung steht.

Die Austragvorrichtung 2 weist einen länglichen Behälter 3 mit von der Bodenseite so eingesetztem Schleppkolben 4 auf, daß zwischen dem Schleppkolben 4 und der gegenüberliegenden Stirnwand stets ein luftfrei vollständig gefüllter Speicherraum gebildet ist, aus dem mit einer unmittelbar an diese Stirnwand anschließenden Dosier-Pumpe 5 das Medium in einzelnen, durch den Pumphub bestimmten Dosierchargen trop fenweise herausgepumpt werden kann. Die Pumpe 5 weist einen einteilig mit der Stirnwand bzw. dem Behälter 3 ausgebildeten und an deren Außenseite liegenden Pumpkolben 7 auf, dessen hülsenförmiger Schaft bis an die Innenseite der Behälter-Stirnwand reicht und der mit einem gegenüber dem Behälter 3 verschiebbaren, hülsenförmigen Pumpenzylinder 6 eine Dosier- bzw. Pumpenkammer 8 begrenzt. Von dem dem Pumpkolben 7 gegenüberliegenden Bodenbereich des Pumpenzy-linders 6 geht ein gegenüber der Pumpenkammer 8 im Querschnitt kleinerer Auslaßkanal 9 aus, welcher einen Austragstutzen 10 durchsetzt.

Zusätzlich zur Pumpe 5 ist eine diese aus dem Behälter 3 versorgende Vorsaugpumpe vorgesehen, die im wesentlichen durch einen den Pumpkolben 7 einschließlich seines Schaftes umgebenden, einteilig von der Behälter-Stirnwand nach außen abstehenden Vorsaugzylinder 11 sowie einen Vorsaugkolben 12 gebildet ist, die innerhalb des Ringspaltes zwischen dem Pumpkolben 7 und dem Vorsaugzylinder 11 eine Vorsaugkammer 13 begrenzen. Die Vorsaugkammer 13 ist annähernd über ihren gesamten Umfang ständig bzw. ventilfrei über eine in der Ebene der Innenseite der Behälter-Stirnwand liegende Übertrittsöffnung 14 zum Behälterspeicher offen, wobei der Schaft des Pumpkolbens 7 an die Stirnwand über Radialstege anschließt, welche die Übertrittsöffnung 14 in einzelne Ringsegmente unterteilen. Der Vorsaugkolben 12 ist durch das dem Behälterinnern zugekehrte freie Ende des hülsenförmigen Pumpenzylinders 6 gebildet, wobei die Pumpenkammer 8 nach Art einer Schieberventilsteuerung im wesentlichen nur in der Ausgangslage der Pumpe 5 zur Vorsaugkammer 13 dadurch geöffnet ist, daß die Kolbenlippe des Pumpkolbens 7 in dieser Ausgangslage in einem im Innendurchmesser erweiterten Endabschnitt des Pumpenzylinders 6 liegt und so eine ringförmig den Pumpkolben 7 umgebende Einlaßöffnung für die Pumpenkammer 8 gebildet ist.

Während der Pumpkolben 7 und der Vorsaugzylinder 11 einteilig mit dem Behälter 3 ausgebildet sind, sind der Pumpenzylinder 6 und der Vorsaugkolben 12 einteilig mit der Stirnwand einer kappenartigen Handhabe 15 ausgebildet, über deren Innenseite sie vorstehen und deren Kappenmantel bzw. Kappe 16 den Behälter 3 auf einem Teil seiner Länge am Außenumfang umgibt. Zwischen der Stirnwand der Kappe 16 und der Behälter-Stirnwand ist der Vorsaugzylinder 11 von einer vorgespannten Pumpenfeder 17 umgeben, welche die Pumpe 5 zur Ausgangslage hin belastet und am Außenumfang von einem über die Behälter-Stirnwand nach außen vorstehenden Ringflansch zentriert umgeben ist. Die Kappe 16 weist über den Umfang verteilte, breite und von der Stirnwand über einen Teil ihrer Länge reichende Fenster 18 auf, in welche Anschläge 19 eingreifen, die durch im Bereich der Behälter-Stirnwand über die Außenseite des Behälters 3 einteilig vorstehende, ringsegmentförmige Stege gebildet sind und die Handhabe 15 in der Ausgangslage gegen die Kraft der Pumpenfeder 17 festlegen.

Die Austragvorrichtung 2 kann mit einer Hand betätigt werden, wobei z.B. zwei Finger beiderseits des Austragstutzens 10 und beispielsweise der Daumen an dem gegenüberliegenden Ende des Behälters 3 angelegt wird. Beim Verschieben der Handhabe 15 und des Behälters 3 gegeneinander gelangt die Kolbenlippe des Pumpkolbens 7 dichtend an die Zylinderlaufbahn, so daß die gefüllte Pumpenkammer 8 nur noch zum Auslaßkanal 9 offen ist und bis zum Erreichen der anschlagbegrenzten Endstellung des Pumpkolbens 7 das Medium aus der Pumpenkammer 8 in Richtung zum Ventil 1 gedrückt wird. Gleichzeitig wird Medium aus der Vorsaugkammer 13 in den Behälterspeicher verdrängt, so daß der Schleppkolben 4 eine kleine Bewegung zum gegenüberliegenden Ende des Behälters 3 ausführt und dabei in seiner Leichtgängigkeit gelockert wird. Beim Rückhub unter der Kraft der Pumpenfeder 17 wird unter Nachziehen des Schleppkolbens 4 Medium aus dem Behälterspeicher in die Vorsaugkammer 13 nachgesaugt, so daß diese vollständig gefüllt ist, bis der Pumpkolben 7 die Einlaßöffnung der durch den Rückhub evakuierten Pumpenkammer 8 freigibt, so daß das Medium schlagartig aus der Vorsaugkammer 13 in die Pumpenkammer 8 strömt und diese vollständig füllt: Das nach Art eines Rückschlagventiles wirkende Sicherungsventil zur Evakuierung der Pumpenkammer 8 ist durch das Ventil 1 gebildet, so daß zwischen der Pumpenkammer 8 und dem Ventil 1 kein weiteres Auslaßventil erforderlich ist. Sämtliche genannten Pumpenteile und das Ventil 1 liegen zweckmäßig in der Mittelachse des Behälters 3.

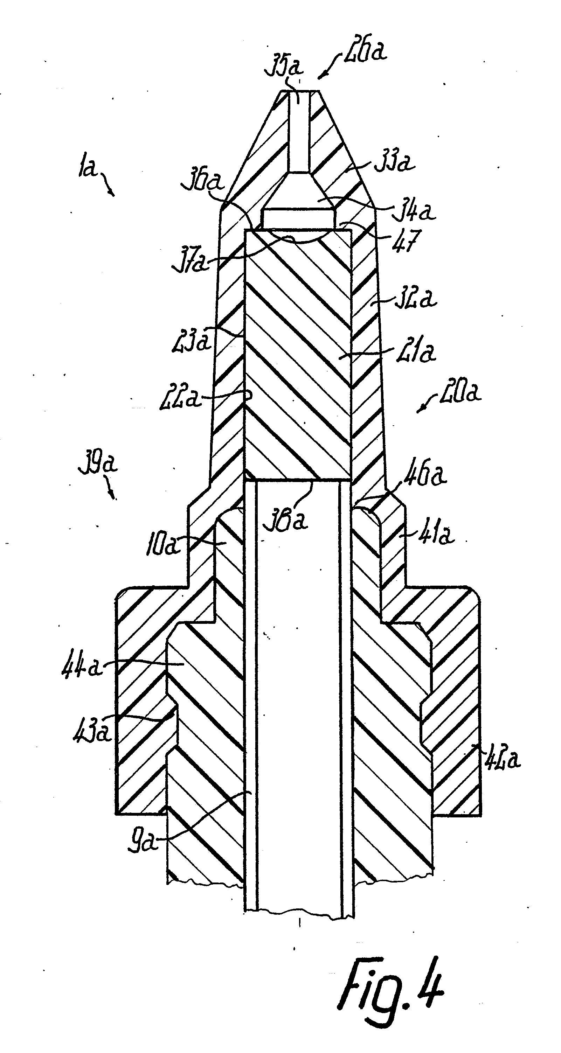

Das Ventil 1 ist nur durch zwei Ventilteile, nämlich einen die äußere Begrenzung des Austragnippels bildenden Ventilmantel 20 und einen in diesem liegenden Ventilkern 21 gebildet, der einteilig mit der Handhabe 15 ausgebildet sein kann. Der Ventilmantel bildet an einem Endabschnitt eine im wesentlichen zylindrische Innen-Umfangsfläche 22, die bei entlastetem Ventil 1 zumindest in Teilbereichen ihrer Länge über den Umfang ganzflächig an einer entsprechenden, zylindrischen Außen-Umfangsfläche 23 des Ventilkernes 21 mit radialer Vorspannung anliegt. In Fig. 2 ist der Ventilkern 21 der besseren Übersichtlichkeit halber im Durchmesser reduziert sowie strichpunktiert angedeutet, um den zwischen den Umfangsflächen 22, 23 gebildeten und im wesentlichen nur unter Druck geöffneten bzw. freigebenden Ventildurchlaß 24 besser erkennen zu können.

An dem dem Behälter 3 bzw. der Pumpe 5 zugekehrten Ende bildet der Ventildurchlaß 24 einen ringförmigen Ventileingang 25, der durch einen an die Umfangsfläche 22 anschließenden und gegenüber dieser im Innendurchmesser geringfügig erweiterten Abschnitt des Ventilmantels 20 gebildet und im wesentlichen über seinen gesamten Umfang ununterbrochen zum bohrungsartigen, zentralen Auslaßkanal 9 hin offen ist. Am freien Ende des Austragnippels bzw. des Ventiles 1 bildet letzteres einen bohrungsartigen, zentralen Ventilausgang 26, dessen Weite bzw. Innendurchmesser jedoch beispielsweise etwa um die Hälfte kleiner als der Durchmesser des Ventildurchlasses 24 ist.

Zwischen dem Ventileingang 25 und dem Ventilausgang 26, jedoch wesentlich näher beim Ventileingang 25 ist im Ventildurchlaß 24 ein Dichtungs- und Drosselbereich 27 vorgesehen, während unmittelbar benachbart zum Ventilausgang 26 der Ventildurchlaß einen radial nach innen zur Mittelachse des Ventilausganges 26 gerichteten Umlenkbereich 28 bildet. Zwischen dem Drosselbereich 27 und dem Umlenkbereich 28 ist der Ventildurchlaß durch über den Umfang verteilte, in jedem Ventilzustand zum Ventilausgang 26 offene Längskanäle 29 gebildet, die jedoch im Abstand vom Drosselbereich 27 enden und deren Breite kleiner als die zwischen ihnen gebildeten Segmentstege ist. Die Länge der Längskanäle 29 ist größer als ihre Kanal breite und liegt etwa in der Größenordnung des Innendurchmessers der Innen-Umfangsfläche 22, wobei ihr Abstand vom Drosselbereich 27 etwa dem Doppelten ihrer Breite entspricht.

Der Drosselbereich 27 bildet eine Zone höchster Abdichtung des Ventildurchlasses 24, in welcher die spezifische Dichtflächenpressung in mehreren benachbarten Bereichen am höchsten ist, wobei gleichzeitig durch wiederholte Umlenkung des Ventildurchlasses eine Wirkung nach Art einer Labyrinthdichtung erzielt werden kann. Der Drosselbereich 27 ist durch drei in gleichen Abständen hintereinander liegende, wulstförmige Ringteile 30 an der Innen-Umfangsfläche 22 des Ventilmantels 20 gebildet, die im Querschnitt teilkreisförmig mit einem Bogenwinkel von höchstens 90° sind und über die Innen-Umfangsfläche 22 um weniger als 1/10 mm vorstehen. Der Abstand zwischen benachbarten Ringteilen 30 ist kleiner als ihre Axialerstrekkung.

Mindestens einem bzw. jedem Ringteil 30 kann in der AußenUmfangsfläche 23 des Ventilkernes 21 eine komplementäre bzw. in der beschriebenen Weise bemessene Ringnut 31 zugeordnet sein oder die Außen-Umfangsfläche 23 kann im Bereich mindestens eines Ringteiles 30 bzw. aller Ringteile 30 ohne Ringnut glattflächig durchgehen, so daß mindestens ein Ringteil 30 im wesentlichen nur über eine ringlinienförmige Fläche an der Außen-Umfangsfläche 23 anliegen kann. Zwischen dem zum Ventileingang 25 nächsten Ringteil 30 und dem Ventileingang 25 ist zwischen den Umfangsflächen 22, 23 des Ventilmantels 20 und des Ventilkernes 21 ein auch bei unbelastetem Ventil freier Ringspalt z.B. dadurch gebildet, daß die Innen-Umfangsfläche 22 des Ventilmantels 20 in diesem Bereich geringfügig gegenüber dem an das andere Ende des Drosselbereiches 27 anschließenden sowie zwischen den Ringteilen 30 liegenden Bereich erweitert ist. Dadurch reicht der Ventileingang 25 praktisch abdichtungsfrei bis an den Drosselbereich 27, wobei er jedoch in Richtung zum Drosselbereich 27 beispielsweise abgestuft enger wird.

Im Bereich zwischen dem Ventileingang 25 und dem Ventilausgang 26 ist der Ventilmantel 20 durch einen elastisch aufweitbaren Mantelteil 32 gebildet, der an dem dem Ventilausgang 26 zugehörigen Ende in eine ringförmige Endwand 33 übergeht, die wesentlich dünnwandiger als der Mantelteil 32 sowie derart stumpfwinklig kegelstumpfförmig ist, daß der Kegel an der inneren und/oder äußeren Stirnfläche dieser Endwand 33 entgegen Austragrichtung verjüngt ist. Dadurch bildet die Endwand 33 einen ringförmigen, gegen den Ventilkern 21 gerichteten und dessen zugehörige Endfläche überdeckenden Vorsprung.

An der inneren Stirnfläche der Endwand 33 sind über den Umfang sternförmig verteilte Vorsprünge in Form von drei radialen Leitstegen 34 vorgesehen, die jeweils an das zugehörige Ende eines Längskanales 29 und über dessen ganze Breite derart anschließen, daß zwischen zwei Leitstegen 34 jeweils ein Längskanal 29 vorgesehen ist, der ohne zugeordneten Leitsteg bis an die innere Stirnfläche der Endwand 33 reicht. Die radial inneren Enden der Leitstege 34 reichen im wesentlichen bis an den Innenumfang einer den Ventilausgang 25 bildenden Austragöffnung 35, die mit etwa 1 mm Durchmesser nur etwa halb so groß wie der Durchmesser der Innen-Umfangsfläche 22 ist und die die Endwand 33 durchsetzt sowie am Boden einer durch die äußere Stirnfläche der Endwand 33 gebildeten Vertiefungskuhle liegt. Die schräg gegen die zugehörige Endfläche 36 des Ventilkernes 21 gerichteten Leitstege 34 liegen mit ihren radial inneren Enden etwa in der Ebene dieser Endfläche 36, jedoch gegenüber der Endfläche 36 dadurch berührungsfrei, daß in der Endfläche 36 eine kugelkalottenförmige Vertiefung als Umlenkpfanne 37 vorgesehen ist, deren Durchmesser größer als der der Austragöffnung 35 ist.

Wird in dem so gebildeten Umlenkbereich 28 durch das Medium ein Druck aufgebaut, so kann die Endwand 33 unter diesem Druck nach außen federnd zwischen den Leitstegen 34 geringfügig stärker ausweichen als im Bereich der, Verstärkungen bildenden und einteilig mit ihr ausgebildeten Leitstege 34.

Die dem Ventileingang 25 zugehörige Endfläche 38 des Ventilkernes 21 liegt zweckmäßig im Bereich des Ventileinganges 25 bzw. zwischen diesem und dem Drosselbereich 27. Der Ventilkern 21 kann ein gesonderter, in den Mantelteil 32 eingesetzter, gegenüber dem Austragstutzen 10 berührungsfreier Körper oder mit dem Austragstutzen 10 beispielsweise einteilig durch einen in dem Auslaßkanal 9 liegenden Schaft verbunden sein, der nur einen möglichst geringen Querschnittsanteil des Durchlaßquerschnittes des Auslaßkanales 9 einnimmt.

Im Bereich des Ventileinganges 25 geht der Mantelteil 32 in einen in der Außenweite stufenförmig erweiterten Muffenteil 39 über, der im wesentlichen durch zwei aneinander anschließende Abschnitte, nämlich eine kürzere, an das hintere Ende des Mantelteiles 32 anschließende und etwa gleiche Wandungsdicke wie der Mantelteil 32 aufweisende Einlaßmuffe 41 sowie eine an diese anschließende, größere Wandungsdicke aufweisende und nochmals erweiterte Sicherungsmuffe 42 gebildet ist, die das hintere Ende des Ventilmantels 20 bildet. Die Sicherungsmuffe 42 weist am Innenumfang mindestens einen vorstehenden Sicherungswulst 43 zum Eingriff in eine entsprechende Ringnut eines Schaftteiles 44 auf, der an das hintere Ende des Austragstutzens 10 anschließt und dessen Verbindung zur Stirnwand der Kappe 16 bildet. Der Schaftteil 44 ist von einem Ringflansch 45 umgeben, so daß eine Ringnut für die Aufnahme der Sicherungsmuffe 42 gebildet ist, wobei die Breite der Ringnut höchstens so groß wie die Wandungsdicke der Sicherungsmuffe 42 im Bereich der Ringwulst 43 gewählt ist, so daß die Sicherungsmuffe 42 nur unter entsprechender Vorspannung und Querschnittsverdichtung ihrer Wandung in die Ringnut eingesetzt werden kann.

Im Bereich der Einlaßmuffe 41 ist die Innenweite des Ventilmantels 20 gegenüber der Innen-Umfangsfläche 22 um die Wandungsdicke des Austragstutzens 10 weiter, so daß der Austragstutzen 10 mit seiner ringförmigen Endfläche an der den Ventileingang 25 umgebenden Ringschulter anliegen kann und sein Außenumfang ganzflächig am Innenumfang der Einlaßmuffe 41 anliegt. Entsprechend ganzflächig liegt auch der Außenumfang des Schaftteiles 44 sowie dessen ringförmig über den Austragstutzen 10 vorstehende Stirnfläche an den entsprechenden Innenflächen der Sicherungsmuffe 42 an. Am hinteren Ende kann die Sicherungsmuffe 42 benachbart zum Ringwulst 43 am Innenumfang mit über den Umfang verteilten Axialschlitzen versehen sein, in welche zur Bildung einer formschlüssigen Verdrehsicherung entsprechende Vorsprünge des Schaftteiles 44 eingreifen. Die Außenweite des Ventilkernes 21 ist im wesentlichen gleich der Innenweite des Auslaßkanales 9, der zwischen der Endfläche des Austragstutzens 10 und der zugehörigen, im Abstand davon liegenden Endfläche 38 des Ventilkernes 21 am Umfang im wesentlichen nur von dem Ventilmantel 20 begrenzt ist. Der Mantelteil 32 nimmt von der Einlaßmuffe 41 zum Ventilausgang 26 in der Wandungsdicke und damit in der Federspannung geringfügig ab. Sämtliche Teile des Ventiles 1 liegen im wesentlichen achssymmetrisch zur Ventilachse 40.

Aufgrund des beschriebenen Pumpvorganges wird das Medium durch den Auslaßkanal 9 nach Art eines Schlauchstromes in den Ventileingang 25 gedrückt, wodurch das hintere Ende des Mantelteiles 32 einschließlich des vorderen Endes der Einlaßmuffe 41 geringfügig aufgeweitet, jedoch die den Ventileingang 25 umgebende Ringkante als Dichtlippe 46 verstärkt gegen die Stirnfläche des Austragstutzens 10 angepreßt wird. Das Medium gelangt unter weiterer Aufweitung des Mantelteiles 32 durch den Drosselbereich 27 in den Bereich zwischen diesem Drosselbereich 27 und den Längskanälen 29, in welchem Bereich die Umfangsflächen der beiden Ventilteile bei entlastetem Ventil ganzflächig aneinander anliegen. Sobald das Medium in den Bereich der Längskanäle 29 gelangt, sind die Strömungsiwderstände schlagartig dadurch wesentlich reduziert, daß erweiterte, auch bei entlastetem Ventil freie Durchlaßquerschnitte gegeben sind. Das Medium gelangt dann in einem Schlauchstrom unterschiedlicher Wandungsdicke bis zur inneren Stirnfläche der Endwand 33 bzw. bis zu den zugehörigen Scheitelflächen der Leitstege 34, so daß die in den Längskanälen 29 fließenden Teilströme einen kürzeren und die dazwischen fließenden Teilströme einen längeren Strömungsweg zurücklegen müssen. Sämtliche Teilströme werden gegen den Boden der Umlenkpfanne 37 geführt, wieder axial umgelenkt und durch die Austragöffnung 35 herausgepreßt.

Die Anordnung ist so getroffen, daß bei Beendigung des Pumphubes im wesentlichen die gesamte Dosiermenge zwischen den dann ballig ausgebeulten Mantelteil 32 und den Ventilkern 21 gefördert ist, wobei durch diese Ausbeulung auch der Kegelwinkel der Endwand 33 entsprechend verringert bzw. der Neigungswinkel der Leitstege 34 entsprechend vergrößert ist. Unter seinen rückfedernden Kräften kehrt der Mantelteil 32 dann zu seiner Schließ- bzw. Ausgangslage zurück, wobei sich sein hinteres Ende schneller verengt und somit der Drosselbereich 27 wieder schließt, so daß das im Ventildurchlaß 24 noch eingeschlossene Medium unter der weiteren Verengung des Mantelteiles 32 nur in Richtung zum Ventilausgang 26 getrieben wird. Durch die beschriebene Ausbildung ist verhindert, daß das Medium vom Ventileingang 25 in der entgegengesetzten Richtung zwischen den Austragstutzen 10 und den Ventilmantel 20 gelangen kann.

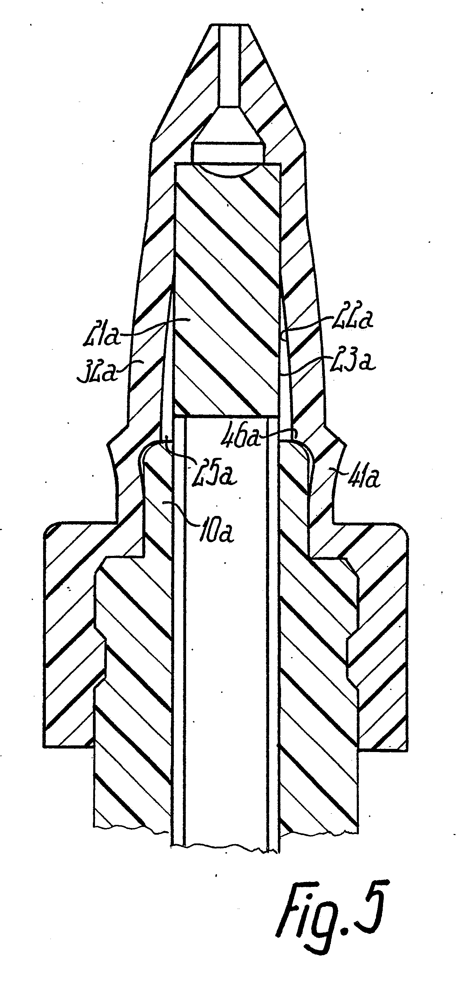

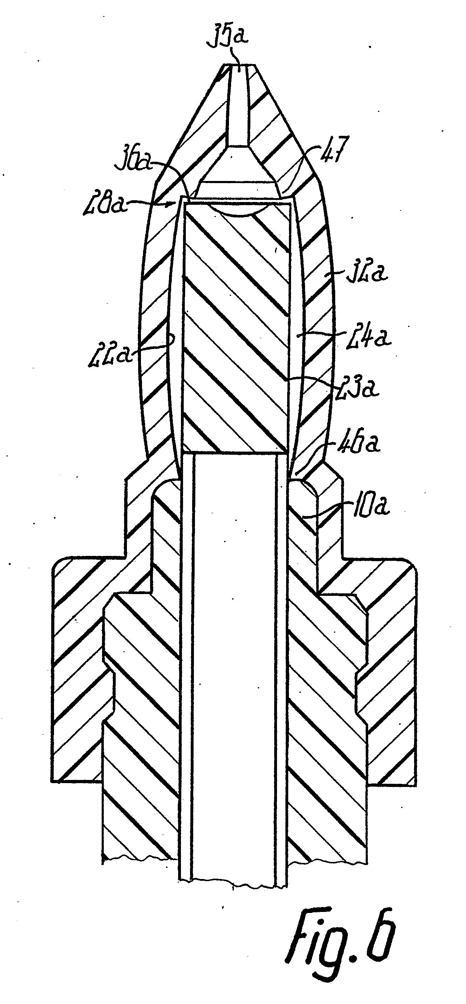

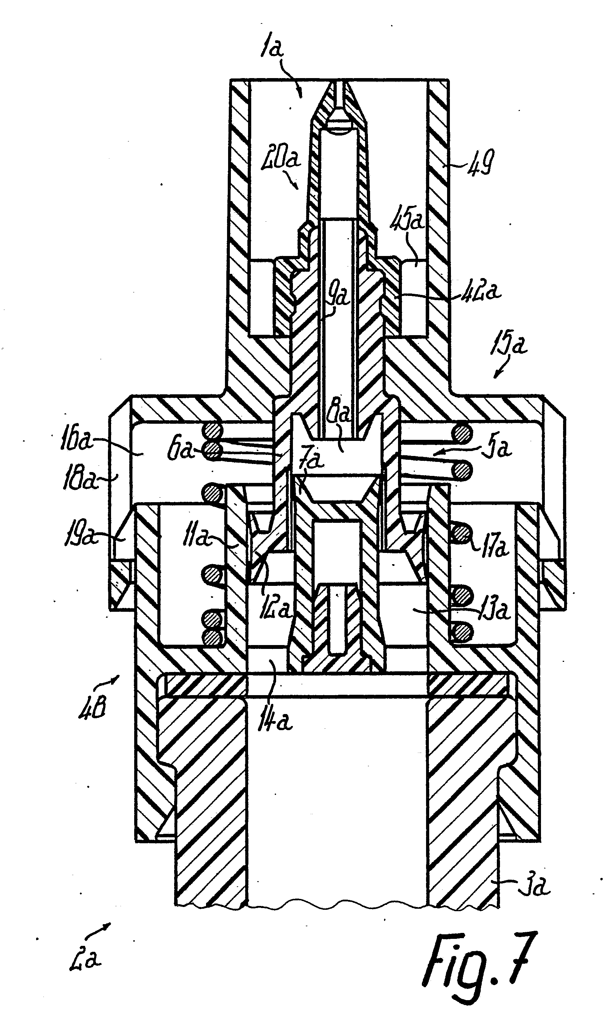

Das Ventil 1a gemäß den Figuren 4 bis 6, das z.B. für eine Austragvorrichtung 2a gemäß den Figuren 7 bis 11 oder aber auch für die Austragvorrichtung 2 gemäß Fig. 1 geeignet ist, ist in Fig. 4 im Ausgangszustand, in Fig. 5 nach Beginn des Pumphubes und in Fig. 6 im wesentlichen am Ende des Pumphubes dargestellt. Der Dicht- und Drosselbereich ist im einzelnen nicht gezeigt, befindet sich aber z.B. in der beschriebenen Weise zwischen den Endflächen 36a, 38a des Ventilkernes 21a. Die Endfläche des Austragstutzens 10a ist im Querschnitt viertelkreisförmig sowie komplementär zu der inneren, die Dichtlippe 46a begrenzenden Stirnfläche der Einlaßmuffe 41a abgerundet, so daß sich sowohl beim Aufweiten der Dichtlippe 46a gemäß Fig. 5 als auch bei aufgeweitetem Mantelteil 32a und zurückgekehrter Dichtlippe 46a eine gute Abdichtung entgegen Strömungsrichtung ergibt. Der Auslaßkanal 9a kann auch durch einen Hüll- bzw. Schlauchkanal dadurch gebildet sein, daß von der hinteren Endfläche 38a des Ventilkernes 21a ein im Querschnitt reduzierter Schaft ausgeht, der zweckmäßig bis an die der Pumpenkammer zugehörige Eintrittsöffnung reicht. Es ist auch denkbar, den Auslaßkanal 9a durch nutartig über den Umfang verteilte Längskanäle zu bilden, die zweckmäßig den größten Teil des Umfanges einnehmen.

Die Endwand 33a des Ventilmantels 20a ist durch einen spitzwinklig kegelstumpfförmigen Endabschnitt des Mantelteiles 32a gebildet, dessen weitester Bereich im Abstand vor der Endfläche 36a des Ventilkernes 21a liegt. Diese Endwand 33a liegt mit einer unmittelbar an die Innen-Umfangsfläche 22a des Mantelteiles 32a anschließenden Ringschulter um die Umlenkpfanne 37a an der Endfläche 36a mit Vorspannung an, wobei diese Ringschulter unter den auftretenden Druckkräften aufweitbar ist. Die Ringschulter ist am Innenumfang von einem zum Ventilausgang 26 verengten Leitkanal 34a begrenzt, dessen größte Weite größer als die Umlenkpfanne 37a ist und dessen engster Bereich in einen mit seinem Ende die Austragöffnung 35a bildenden zylindrischen Ausgangskanal übergeht. Durch die Ringschulter und den Leitkanal ist eine an der Endfläche 36a liegende Dichtlippe 47 gebildet, die in der beschriebenen Weite aufweitbar ist.

Zu Beginn des Eintrittes des Mediums durch den Ventileingang 25a in den Ventildurchlaß 24a wird der Mantelteil 32a von seinem hinteren Ende nach vorne fortschreitend aufgeweitet, so daß zunächst die Dichtlippe 47 stärker gegen die Endfläche 36a angedrückt wird. Etwa dann, wenn das Medium den im Bereich der Dichtlippe liegenden bzw. den durch die Dichtlippe 47 gebildeten Umlenkbereich 28a gemäß Fig. 6 erreicht hat, schließt die hintere Dichtlippe 46a wieder, so daß nunmehr das Dosiervolumen im wesentlichen vollständig vor dieser Dichtlippe 46a unter dem Druck des federnd aufgeweiteten Mantelteiles 32a eingeschlossen ist. Durch die Aufweitung des vorderen Endes des Mantelteiles 32a hebt auch die Ventillippe 47 nach Art eines druckabhängig arbeitenden, am Ende des Ventilkernes 21a liegenden Ventiles ab, so daß das Medium aus dem genannten eingeschlossenen Raum mit verzögerter Geschwindigkeit in den gemeinsam von dem Leitkanal 34a und der Umlenkpfanne 37a begrenzten Raum gelangt und von dort dann in Richtung der Austragöffnung 35 strömt, an welcher es einen Tropfen bildet.

Wie Fig. 6 zeigt, kann die Anordnung so getroffen sein, daß der die Austragöffnung 35a bildende Ausgangskanal durch die Aufweitung des Mantelteiles 32a und die zugehörige Verformung des hinteren Endes der Endwand 33a im Bereich der Austragöffnung 35a zunächst geringfügig rückfedernd verengt wird und mit der Rückkehr des Mantelteiles 32a zu seiner Ausgangslage ebenfalls zur Ausgangslage zurückkehrt, wodurch die Tropfenbildung noch verbessert werden kann.

Wie die Figuren 7 bis 11 zeigen, können der Vorsaugzylinder 11a, der Pumpkolben 7a und/oder die den Behälter 3a abschließende Stirnwand auch durch einen gesonderten, kappenförmigen Aufsatz 48 gebildet sein, der mit seiner ringförmigen, innerhalb eines Mantelteiles liegenden Stirnwand unter Zwischenlage einer Ringdichtung gegen die Stirnfläche des offenen Endes des Behälters 3a gespannt ist und beispielsweise mit einem innen liegenden Clipswulst einen Ringbund am Außenumfang des zugehörigen Behälterendes hintergreift. Dadurch kann die Pumpe 5a als in sich geschlossene, vom Behälter 3a gesonderte Baugruppe ausgebildet sein, die, beispielsweise zur Nachfüllung, auch wieder vom Behälter 3a abgenommen werden kann. Im dargestellten Ausführungsbeispiel ist die Innenweite des Behälters 3a gleich der Innenweite des Vorsaugzylinders 11a, so daß sich ein bis zum Vorsaugkolben 12a am Außenumfang stetig begrenzter Speicherkanal ergibt. Es ist aber auch denkbar, den Behälter 3a mit einem in der dargestellten Weise ausgebildeten Behälterhals für die Aufnahme der Pumpeneinheit zu versehen und im Abstand von diesem Behälterhals erweitert auszubilden. Sofern die Austragvorrichtung 2a nur für den Überkopfbetrieb bestimmt ist, kann auch auf einen Schleppkolben oder ähnliche Maßnahmen für einen ständig luftfreien Füllzustand des Behälters 3a verzichtet werden. In das hintere Ende des hohlen Schaftes des Pumpkolbens 7a ist ein mit diesem hinteren Ende bündig abschließender Verschlußstopfen eingesetzt, so daß sich innerhalb dieses Schaftes keine Restmengen des auszutragenden Mediums sammeln können. Der Aufsatz 48 trägt die Kappe 16a.

Die Pumpenkammer 8a wird bei dieser Ausführungsform zur Vorsaugkammer 13a dadurch geöffnet, daß der Pumpkolben 7a in den Bereich von Längsschlitzen an der Innenumfangsfläche des Pumpenzylinders 6a gelangt, der annähernd über seine gesamte Länge konstante Innenweite aufweist. Der Pumpkolben 7a weist zur Bildung einer im Querschnitt spitzwinkligen Kolbenlippe eine kegelstumpfförmig vertiefte Kolbenstirnfläche auf, welcher am Boden des Pumpenzylinders 6a ein komplementärer Vorsprung gegenüberliegt, so daß die Pumpenkammer 8a am Ende des Pumphubes vollständig in den Auslaßkanal 9a entleert wird.

Das Ventil 1a liegt im wesentlichen vollständig innerhalb eines von der Stirnwand der Kappe 16a abstehenden Schutzmantels 49, der über seinen Innenumfang verteilte Siche rungsstege 45a aufweist, die am Außenumfang des Sicherungsflansches 42a des Ventilmantels 20a mit ihren Längskanten anliegen.

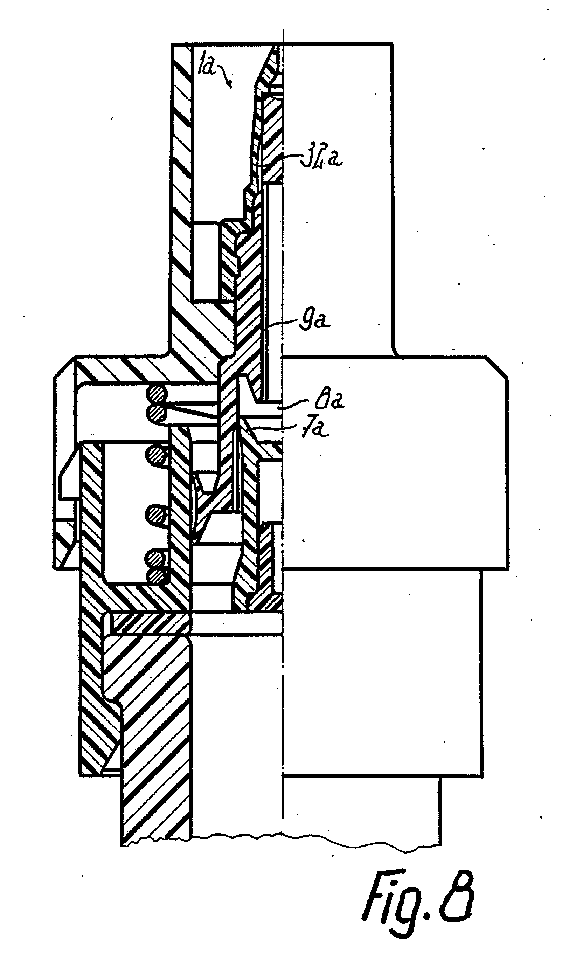

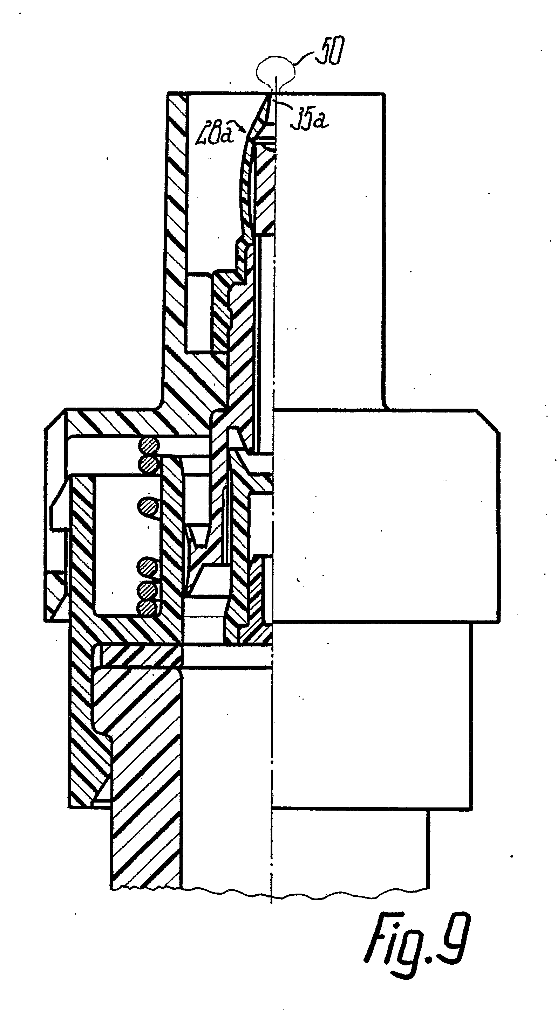

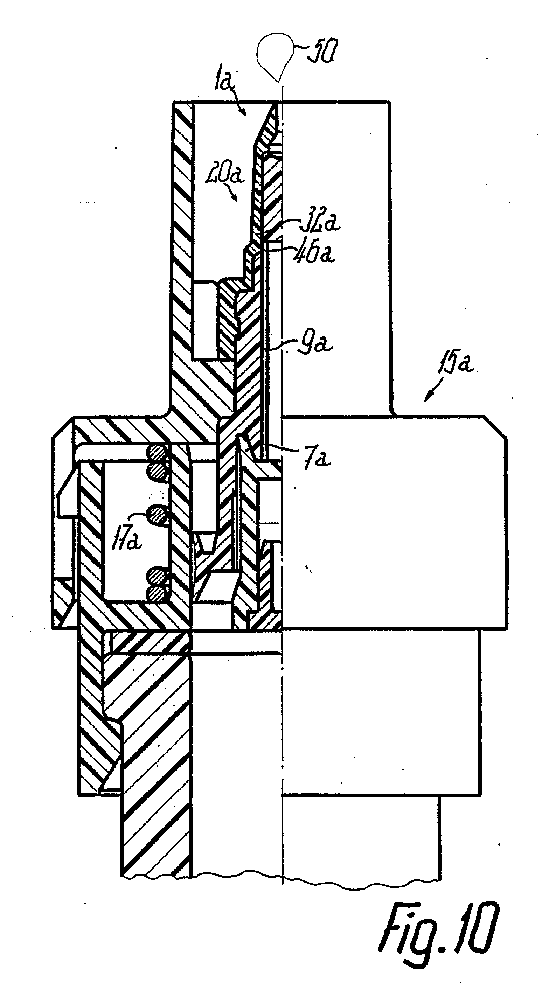

Aus der Ausgangsstellung gemäß Fig. 7 wird die Handhabe 15a entgegen der Kraft der Ventilfeder 17a niedergedrückt, so daß der Pumpkolben 7a gemäß Fig. 8 die Längsschlitze schließt und das Medium aus der sich verengenden Pumpenkammer 8a durch den Auslaßkanal 9a in das Ventil 1a gedrückt wird. Dadurch weitet das hintere Ende des Mantelteiles 32a in der beschriebenen Weise gemäß den Figuren 5 und 8 auf. Kurz vor Ende des Pumphubes gemäß Fig. 9 gelangt das Medium über den Umlenkbereich 28a zur Austragöffnung 35a, so daß es am Ende des Austragnippels beginnt, einen frei liegenden und mit seinem Tropfenschaft an die Austragöffnung 35a angebundenen Tropfen 50 zu bilden. Dieser Tropfen 50 ist dann, wenn der Ventilmantel 20a zu seiner Ausgangslage zurückgekehrt ist, gemäß Fig. 10 voll ausgebildet und kann sich ablösen. Das Eingangsende des Auslaßkanales 9a kann während dieser Arbeit des Ventiles 1a gegen unerwünschte Rücksaugwirkungen nach Art eines handbetätigten Ventiles dadurch geschlossen bleiben, daß der Pumpkolben 7a mit der Handhabe 15a gemäß Fig. 10 in der Pumphubendstellung gehalten wird und dadurch die vertiefte Kolbenstirnfläche dieses Eingangsendes dicht verschließt.

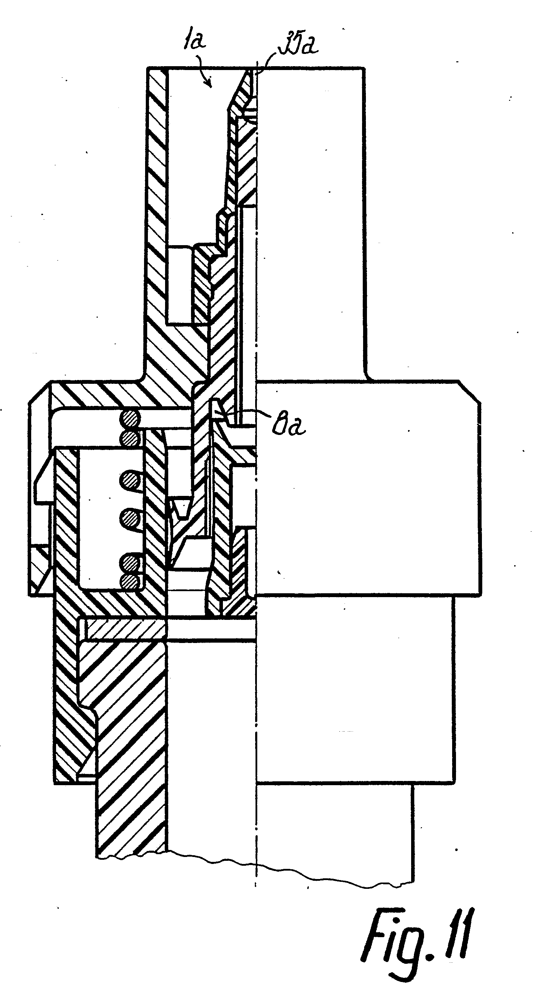

Wird die Handhabe 15a jedoch zuvor freigegeben, so daß der Pumpkolben 7a beginnt, unter der Kraft der Ventilfeder 17a zu seiner Ausgangslage zurückzukehren, so führt die dadurch bewirkte Evakuierung des Auslaßkanales 9a sehr schnell zu einer Rückführung der Dichtlippe 46a sowie des anschließenden Bereiches des Mantelteiles 32a in die Schließlage. In jedem Fall bildet beim Rückhub gemäß Fig. 11 das Ventil 1a nach Art eines Rückschlagventiles das geschlossene Auslaßventil zwischen der Austragöffnung 35a und der Pumpenkammer 8a, so daß ein gesondertes Rückschlag- bzw. Überdruckventil nicht erforderlich ist. In besonderen Fällen, insbesondere bei sehr zähflüssigen Medien, kann das Ventil auch ohne Drosselbereich ausgebildet sein, so daß z.B. der Mantelteil 32a mit einer über seine Länge durchgehend glatten Innenumfangsfläche ganzflächig an der Außenumfangsfläche des Ventilkernes 21a anliegt. Im übrigen sind in den Figuren 4 bis 11 für einander entsprechende Teile die gleichen Bezugszeichen wie in den Figuren 1 bis 3, jedoch mit dem Index "a" verwendet, so daß die entsprechenden Beschreibungsteile wechselweise gelten. Einzelne, unterschiedliche Merkmale der beiden Ausführungsformen können auch in einer einzigen Ausführungsform vorgesehen sein.

## Ansprüche

1. Ventil, insbesondere für manuelle Austragvorrichtungen (2) zum Austrag von Medien, dadurch gekennzeichnet, daß es zwei zwischen aneinander anliegenden Flächen o.dgl. einen von einem Ventileingang (25) zu einem Ventilausgang (26) führenden Ventildurchlaß (24) begrenzende Ventilteile (20, 21) aufweist.

2. Ventil nach Anspruch 1, dadurch gekennzeichnet, daß mindestens einer der Ventilteile zur druckabhängigen Aufweitung des Ventildurchlasses (24) aus der Ventilschließlage radial rückfedernd verformbar ist und daß vorzugsweise von den Ventilteilen einer einen Ventilmantel (20) und der andere einen innen liegenden Ventilkern (21) bildet.

3. Ventil nach Anspruch 1 oder 2, dadurch gekennzeichnet, daß Umfangsflächen (22, 23) der Ventilteile zwischen dem Ventileingang (25) und dem Ventilausgang (26) mindestens einen Drosselbereich (27) aufweisen, der durch mindestens einen Ringteil (30) oder dgl. und die gegen überliegende Umfangsfläche (23) gebildet ist, die insbesondere in der Ventilschließlage den Ventildurchlaß (24) im wesentlichen dicht versperrt, daß vorzugsweise mindestens ein Ringteil (30) durch eine Ringwulst gebildet ist, die im Querschnitt insbesondere im wesentlichen teilkreisförmig gekrümmt ist, wobei mindestens ein Ringteil (30) in eine gegenüberliegende Vertiefung eingreift und/oder wenigstens ein Ringteil an einer vertiefungsfreien Gegenfläche anliegt und daß vorzugsweise mindestens zwei benachbarte Ringteile (30) unmittelbar benachbart hintereinander, insbesondere mit einem gegenüber ihrer Breite kleineren Abstand voneinander liegen und/oder gleich ausgebildet sind.

4. Ventil nach einem der vorhergehenden Ansprüche, dadurch gekennzeichnet, daß mindestens ein Ringteil (30) eines Drosselbereiches elastisch verformbar ausgebildet, insbesondere durch den elastischen Ventilteil gebildet bzw. an der Innen-Umfangsfläche (22) des Ventilmantels (20) angebracht ist, daß vorzugsweise dem jeweiligen Ringteil (30) an der gegenüberliegenden Umfangsfläche (23) eine Ringnut (31) zugeordnet ist, aus welcher der Ringteil (30) in der Öffnungslage insbesondere im wesentlichen vollständig austritt und daß vorzugsweise zwischen Ringteilen (30) und dem Ventilausgang (26) der Ventildurchlaß (24) durch über den Umfang verteilte Längskanäle (29) gebildet ist, die insbesondere durch im Abstand von den Ringteilen (30) beginnende Nuten an der Innen-Umfangsfläche (22) des Ventilmantels (20) gebildet sind und einen im Durchlaßquerschnitt erweiterten Bereich bilden.

5. Ventil nach einem der vorhergehenden Ansprüche, dadurch gekennzeichnet, daß der Ventileingang (25) wenigstens teilweise parallel zum anschließenden Abschnitt des Ventildurchlasses (24) bzw. zu den Ventilteilen ausge richtet, vorzugsweise durch einen Ringspalt zwischen einer hinteren Endfläche (38) eines Ventilkernes (21) und einem gegenüber diesem in der Innenweite erweiterten Abschnitt eines Ventilmantels (20) gebildet ist.

6. Ventil nach einem der vorhergehenden Ansprüche, dadurch gekennzeichnet, daß zwischen dem Ventileingang (25) und dem Ventilausgang (26), insbesondere in Austragrichtung nach einem Drosselbereich (27) eine radial, insbesondere nach innen gerichtete Umlenkung des Ventildurchlasses (24) vorgesehen ist, die vorzugsweise an die zugehörigen Enden von Längskanälen (29) anschließt und/oder in eine Umlenkpfanne (37) in der zugehörigen Endfläche (36) eines Ventilkernes (21) mündet.

7. Ventil nach einem der vorhergehenden Ansprüche, dadurch gekennzeichnet, daß der Ventilausgang (26) zentral in einer Endwand (33) vorgesehen ist, die vorzugsweise unter dem Ventil-Innendruck elastisch verformbar ausgebildet ist.

8. Ventil nach einem der vorhergehenden Ansprüche, dadurch gekennzeichnet, daß die beiden Ventilteile mit mindestens einer, insbesondere zwei Ventillippen (46a, 47) aneinander anliegen, wobei vorzugsweise eine Dichtlippe (46a) im Bereich des Ventileinganges (25a) und/oder eine Dichtlippe (47) im Bereich der vorderen Endfläche (36a) des Ventilkernes (21a) liegt.

9. Ventil nach einem der vorhergehenden Ansprüche, dadurch gekennzeichnet, daß der Ventilausgang (26) unmittelbar eine ins Freie führende Austragöffnung (35) für die Austragvorrichtung (2) bildet, vorzugsweise durch eine Öffnung in der die Umlenkung bildenden ringförmigen Endwand (33) des Ventilmantels (20) gebildet ist, die insbesondere wenigstens teilweise im Abstand zur Endfläche (36) des Ventilkernes (21) liegt.

10. Ventil nach einem der vorhergehenden Ansprüche, dadurch gekennzeichnet, daß der Ventilmantel (20) hinter dem Ventildurchlaß (24) in einen erweiterten Muffenteil (39) übergeht, der vorzugsweise axial und/oder radial gesichert in Eingriff mit einem hinteren Schaftteil (44) der Austragvorrichtung (2) und/oder des Ventilkernes (21) steht und insbesondere im Bereich des Ventileinganges (25) eine in einen Mantelteil (32) übergehende Einlaßmuffe (41) des Ventilmantels (20) bildet.

11. Ventil nach einem der vorhergehenden Ansprüche, dadurch gekennzeichnet, daß der Ventilkern (21) Bestandteil eines Vorsaugkolbens (12), eines Pumpenzylinders (6) und/oder einer Betätigungs-Kappe (16) der Austragvorrichtung (2) ist und vorzugsweise mit dem Ventilmantel (20) einen vorstehenden Austragnippel der Austragvorrichtung (2) bildet.

*Fig.1*

Fig.2

Fig.3

Fig.4

Fig. 5

Fig.6

*Fig.7*

Fig. 8

Fig.9

Fig. 10

Fig. 11